# EUROPEAN PATENT SPECIFICATION

(11) **EP 4 488 297 B1**
(45) Date of publication and mention of the grant of the patent: **07.05.2025**
(21) Application number: 23183561.2
(22) Date of filing: 05.07.2023
(51) Int. Cl.: C08B 30/12, A23L 29/212, C08L 3/02

(54) **METHOD FOR MODIFICATION OF STARCH**
VERFAHREN ZUR MODIFIZIERUNG VON STÄRKE
PROCÉDÉ DE MODIFICATION D'AMIDON

(43) Date of publication of application: 08.01.2025
(73) Proprietor: Südstärke GmbH, 86529 Schrobenhausen (DE)
(72) Inventor: LANG HALTER, Evi, 86529 Schrobenhausen (DE)
(74) Representative: Hoefer & Partner Patentanwälte mbB

(56) References cited:
- SEKER M ET AL: "Cross-linking starch at various moisture contents by phosphate substitution in an extruder", CARBOHYDRATE POLYMERS, APPLIED SCIENCE PUBLISHERS , LTD BARKING, GB, vol. 59, no. 4, 15 March 2005 (2005-03-15), pages 541 - 544, XP027721558, ISSN: 0144-8617, [retrieved on 20050315]
- CHATPAPAMON CHATSACHEE ET AL: "Pasting properties of cassava starch modified by heat-moisture treatment under acidic and alkaline pH environments", CARBOHYDRATE POLYMERS, vol. 215, 26 March 2019 (2019-03-26), pages 338 - 347, XP085657665, ISSN: 0144-8617, DOI: 10.1016/J.CARBPOL.2019.03.089

## Description

### Field of the Invention

The present invention concerns a method for modification of a starch. In particular, it concerns a method for alkaline modification where in a starch is contacted with an alkaline solution at defined conditions regarding the pH of the alkaline solution used and the water content of the starch treated with the alkaline solution. The present invention provides a method for the clean label modification of starch obtaining properties equaling and exceeding chemically modified starches. Mild treatment conditions are applied allowing an economical and sustainable procedure.

### Technical Background

Chemically cross-linked starches (E1412) are widely used in the food industry for many applications. In the art, crosslinking is achieved using sodium tri meta phosphate or phosphorus oxychloride. According to food law regulatory guidelines chemically modified starches are to be declared as modified starch or E 1412. Due to the growing interest of consumers regarding healthy and natural food, there is a need in the art for providing an improved method for the preparation of clean label ingredients and products. Especially phosphate-containing ingredients are in the focus of industrial production.

Several processes for treating starch with alkaline or acidic solutions are known in the art. In particular the treatment with an alkaline solution has been discussed in the prior art for obtaining a thermally-inhibited starch functionally approaching chemically cross-linked starches.

For example, US 2001/0017133 A1 discloses a process for making a thermally-inhibited, non-pregelatinzed starch or flour, comprising the steps of dehydrating the starch or flour to anhydrous or substantially anhydrous, and heat treating the anhydrous or substantially anhydrous starch of flour at a temperature for a time sufficient to inhibit the starch or flour. The process may include adjusting the pH of the non-pregelatinized granular starch to neutral or greater prior to the dehydrating step. Example 10 of US 2001/0017133 A1 describes the starch samples with a 25% solution of sodium carbonate in order to raise the pH of the starch, followed by heating the samples to 160°C. This technique is aimed at raising the pH of the samples in order to prevent acid hydrolysis and promote inhibition of the starch. The above described method as well as the other methods according to the prior art are disadvantages regarding the complexity and reliability of the treatment, and the advantageous properties of the starch product obtained, in particular regarding its viscosity profile including the end viscosity obtained.

Chatpapamon et al., Carbohydrate Polymers 215 (2019) 338-347 discloses a modified starch obtained by adding 1 M NaOH to cassava starch and removing excess water to obtain a starch composition having a water content of 40 wt% and pH = 9 and heating the starch composition at 100°C.

It is therefore an object of the present invention to provide a simple (economical) as well as sustainable and reliable method for modification of starch allowing a defined result and advantageous properties of the treated starch, in particular a method for the clean label modification of starch obtaining properties corresponding to chemically modified starches (E 1412).

The inventors have surprisingly found that treating a starch with an alkaline solution of a defined pH range in order to obtain an alkali-treated starch composition having a defined water content, followed by heating of the alkali-treated starch composition allows for the provision of a simple, economic and reliable method obtaining highly advantageous properties of the so-treated starch product. The material obtained applying the method described herein surprisingly exhibits properties corresponding to or even superior to chemically cross-linked starches (E 1412).

### Summary of the Invention

A first aspect of the present invention concerns a method for modification of starch, comprising the following steps:
a) adding an alkaline solution to a starch, in particular a native starch, to obtain an alkali-treated starch composition having a water content of 25 to 40 wt.-%, based on the total weight of the starch composition,
b) heating the alkali-treated starch composition, optionally after pre-drying,
wherein the pH of the alkaline solution is from 9 to 12, in particular 10 to 11, and the pH of the alkali-treated starch composition is from 5 to 7.

A second aspect of the present invention concerns a starch product obtainable by the process according to the first aspect of the invention.

A third aspect of the present invention concerns the use of a starch product according to the above second aspect of the invention, or produced according to the first aspect of the invention in a food product, in particular as a thickener or stabilizer.

As set out in detail herein, important features of the present invention concern the use of mild alkaline conditions to moisten the starch to a defined water content, contributing to an economical and sustainable procedure leading to highly advantageous (clean label) starch products. The inventors have found that the method of the invention as described herein surprisingly allows the production of an advantageous, not chemically modified starch product by a simple and straightforward process, using standard equipment, avoiding extra process steps such as preparation of a starch suspension (slurry) with subsequent dewatering and drying procedures.

### Detailed Description of the Invention

The inventors have found that the process of the invention as described herein surprisingly allows the production of a starch product having not only an advantageously high end viscosity comparable or even superior to commercially available, chemically cross-linked starch products (E 1412), but also a very high and advantageous ratio of the end viscosity (EV) to the trough (minimum) strength viscosity.

At the same time, the process of the invention is very simple and straight forward, allowing an economic production of the advantageous starch product, avoiding excess time or energy consumption due to e.g. drying of a dispersion or slurry of the starch, or heating to very high temperatures.

According to the method of the invention, any starch, in particular native starch or non-pregelatinized starch may be used as starting material. In the first step of the process of the invention, starch, in particular native (natural) starch, is used. The native starch is preferably not chemically modified. Most preferably, native starch is not chemically or physically modified and contains native starch granules. Waxy starches and high amylose starches, i.e. (chemically unmodified) starches with a very high amylopectin content or a very high amylose content are also considered within the term native starch as used herein. The starch may be obtained from any starch-producing plant, in particular potato starch, maize/corn starch, starch from tapioca, arrowroot, wheat, rice, sago, mung bean or the like. Potato starch is particularly preferred, in particular native starch from potatoes. Preferably, unwanted impurities originating from the respective plant source material are removed.

The starch used (as a starting material) in step a) above should be sufficiently dry, preferably having a water content of below about 20 wt.-%, preferably below 15 wt.-%, based on the total weight of the starch. According to a preferred embodiment it further has a water content of at least about 1 wt.-%, more preferred at least about 3 wt.-%. According to a preferred embodiment of the present invention, the starch used (as a starting material) in step a) of claim 1 has a water content of 1 to 20 wt.-%, more preferred 5 to 20 wt.-%. It has been found that such a water content allows an advantageous uptake of the alkaline solution according to step b) above throughout the starch material in an even and uniform way.

It is further preferred that at least about 10 ml, preferably at least about 15 ml, more preferred at least about 20 ml, in particular at least 25 ml of alkaline solution as defined herein are used per 100 g of starch used as a starting material in step a).

In other words, in step a) a relatively dry starch is moistened with an alkaline solution of defined pH to a defined water content.

For the starch used as a starting material in step a) no excess water content of more than 40% is used, and in particular, no slurry or suspension is used. A too high water content, in particular use of a slurry of dispersion, will not allow to obtain an advantageous treatment with an alkaline solution to a water content of 25 to 40 weight percent, based on the total weight of the starch composition, or will require prior removal of excess water in order to obtain a water content within the aforementioned range, which is both timewise and energetically disadvantageous, and negatively influences the homogenous and reliable alkali treatment of the starch.

The aforementioned water content of 25 to 40 wt.-% of the alkali-treated starch composition, i.e. the starch after the addition of the alkaline solution, is important to have a uniform and effective distribution of alkali (OH⁻) throughout the starch composition. This has been found to be important for an advantageous modification/cross-linking of the starch. As mentioned above, higher water contents are disadvantageous for a uniform and effective alkali treatment and starch modification, and it is assumed to involve secondary effects of the (hydroxyl) ions present in the solvent part surrounding the starch particles. Also, forming a solvent phase around the starch particles (in a slurry or dispersion) may remove soluble species and ions from the starch particles, and shift concentrations of soluble species or ions in the starch particles (grains), which is apparently disadvantageous. Moreover, the excess water has to be removed in a time and cost consuming drying step. According to a preferred embodiment of the present invention, the alkali-treated starch composition has a water content of 30 to 40 wt.-%, in particular exemplarily 30 to 35 wt.-% or 32 to 37 wt.-%, based on the total weight of the starch composition.

On the other hand, a water content below 25 weight percent for the alkali-treated starch has been found unsuitable for obtaining a uniform and effective alkali distribution throughout the starch, thus not providing an optimized and advantageous modification/cross-linking throughout the starch.

Another important factor regarding the method of the invention is the pH of the alkaline solution used for treating the starch. Thus, it was surprisingly found that the pH should be within a defined range from pH 10 to pH 12. Higher pH values, i.e. higher concentrations of OH⁻ in the solution have been found to carry the risk of less uniform and reliable cross-linking/modification throughout the starch and the product properties obtained, apart from the disadvantage of using extra alkaline from the environmental and cost view point. Also, a pH value of the alkaline solution below 10, i.e. lower concentrations of OH⁻ in the solution, were found by the inventors to be less advantageous regarding modification/cross-linking of the starch and thus the properties of the starch product obtained by the method of the invention.

In summary, the inventors have thus found that the use of an alkaline solution having a defined pH value from 10 to 12 for treating a starch in order to obtain an alkali-treated starch having a defined water content of 25 to 40 weight percent, based on the total weight of the starch composition, is highly advantageous as set out above. The main product properties affected if the pH of the alkaline solution is outside the range of 10 to 12 are the end viscosity and the ratio of the end viscosity (EV) to the trough (minimum) viscosity (TV).

Surprisingly, it has been found that the mild alkaline treatment of the starch as set out herein does not significantly affect the pH of the starch, and no significant increase in the pH of the starch as measured after the alkali treatment is needed in order to obtain a very advantageous modification/cross-linking of the starch. Thus, in a preferred embodiment of the present invention, the pH of the alkali-treated starch composition is from about 5 to about 8, in particular 5.5 to 7.

The alkaline solution is preferably an aqueous alkaline solution. Preferably, the alkaline solution comprises a salt of an alkali or alkaline earth metal, more preferably the alkaline solution is an aqueous solution of one or more alkali or alkaline earth metal hydroxides. The presence of other components in the alkaline solution is acceptable if it does not negatively affect the pH as set out herein and the starch. Also, apart from starch and alkaline solution additional ingredients may or may not be added to the formulation obtained in step a), such as salts or enzyme activators. In a preferred embodiment of the present invention, the formulation (of step a)) essentially or completely consists of native starch and alkaline demineralized water.

The alkaline agent may be any compound containing hydroxide ions (OH⁻) or generating OH⁻when in contact with water. Preferably, the alkaline agent is an alkali metal hydroxide, in particular NaOH or KOH. Alternatively, basic compounds, preferably basic carbonates, in particular sodium carbonate may be used. The most preferred alkali agents are however the alkali metal hydroxides and in particular NaOH and KOH, as mentioned above. Thus, according to a preferred embodiment of the present invention, the alkaline solution is an aqueous solution of sodium carbonate, NaOH or KOH, preferably NaOH or KOH, more preferably NaOH.

Any means for uniformly contacting the alkaline solution with the starch as known in the art may be used, including without limitation conventional mixing devices, and may involve spraying and/or sprinkling, or any other way of otherwise adding the alkaline solution to the starch material. The starch material is preferably mixed when adding the alkaline solution in order to promote fast uniform distribution thereof throughout the starch material.

In a subsequent stage following the addition of the alkaline solution as set out above, the alkali-treated starch compositions is heated. The heating temperature and time may vary. Usually, the heating time is at least 15 minutes, preferably at least 30 minutes, more preferably at least one hour. According to a preferred embodiment of the invention, the heating according to step b) of claim 1 is carried out for 1 to 24 hours, preferably 3 to 10 hours.

The heating temperature is preferably above 100°C as this has been found to be advantageous for an effective and advantageous modification/cross-linking of the starch. At the same time, it has been found that in many cases a heating to temperatures of 160°C or more is not only energetically disadvantageous, but also has negative impact on the properties of the resulting starch product, including a discoloration thereof. Therefore, preferably, the temperature within the heating step of the method according to the invention is kept within the range of about 100°C to about 140°C, in particular 100°C to about 120°C. Preferred conditions according to the present invention regarding the heating according to step b) are for example 100°C to 120°C, preferably for at least 1 hour. In many cases it was found that a temperature from about 105°C to about 115°C is even more preferred. In many cases it was found that a heating time period of 5 to 6 hours is preferable.

According to one embodiment of the invention, a pre-drying step may be performed before the aforementioned heating step, in particular at a temperature below 100°C. Any conventional drying device as known in the art may be used.

According to a preferred embodiment of the invention, the heating and the optional pre-drying according to step b) is conducted until a water content of below 10 wt.%, more preferably below 5 wt.-%, more preferably below 3 wt.-%, based on the total weight of the starch composition.

According to a preferred embodiment of the present invention, the optional pre-drying may be conducted until a water content of below 10 weight percent, in particular below 3 weight percent, based on the total weight of the starch, is reached.

According to a preferred embodiment of the present invention, after the (drying and) heating step b), the starch product obtained is cooled to ambient temperature and may be remoistened to the desired water content. Depending on the intended use, this is often a water content of 10-15%. Cooling to ambient temperature can be done with or without an appropriate cooling device as known in the art.

Thus, according to one specific embodiment of the present invention, the method contains the following steps:
a) moistening native starch as defined herein with an alkaline solution as defined herein,
b) applying the moistened starch to a drying device,
c) heat treating the starch for a period of time and a temperature as defined herein,
d) cooling to ambient temperature,
e) moistening with e.g. water to a predetermined moisture content.

Other steps may or may not be included.

As a second aspect of the present invention, the inventors have found that the method of the invention provides for an advantageous, alkaline-treated starch product. The combination of steps and parameters used in the inventive method provides not only a highly advantageous end viscosity of the obtained starch product, which compares to or even exceeds the end viscosity of commercially available, chemically cross-linked starch products, but also has a high ratio of the so-called trough (minimum) viscosity (TV) to the end viscosity (EV) of the starch product. The high ratio provides for a novel starch product which has a lowered viscosity when stirred, allowing e.g. easy processing and mixing into the desired compositions, and at the same time a high recovery of end viscosity after termination of the stirring.

Thus, the second aspect of the present invention is directed to a starch product obtainable by the process as described herein. Advantageously, it has a viscosity profile as follows: the ratio of the end viscosity (EV) to the trough (minimum) viscosity (TV) is at least 3.0, preferably at least 4.0, more preferably at least 5.0.

The EV and the TV, as well as the respective ratio are preferably measured in a Rapid Visco Analyzer as detailed below. In general, the TV is determined as the lowest viscosity at maximum shear/stirring and heating, and EV is determined as the end viscosity (see also pasting profile described below).

Thus, shear stability was preferably determined in an RVA (Rapid Visco Analyzer) device imitating shear forces by applying a high speed rotation rate according to the methodology as described further below. According to a preferred embodiment, the starch obtained according to the present invention has an EV (end viscosity) after high speed rotation of more than 900 mPa_{*}s, preferably more than 1000 mPa_{*}s, more preferably more than 1100 mPa_{*}s.

A third aspect of the present invention is directed to the use of the starch product according to the second aspect above, in particular produced according to the method as described herein, in a food product, in particular as a thickener or stabilizer. The properties of the starch product according to the invention make it particularly suitable for such a use, and allows the provision of a clean label starch product having equal and even superior properties compared to commercially available, chemically cross-linked starch (E 1412).

Thus, the present invention provides starch products having highly interesting and advantageous viscosity and rheology properties making it suitable for various applications, not only but including in particular food applications.

Therefore, a third aspect of the present invention is directed to the use of such a starch product according to the second aspect of the present invention, or produced according to the method of the invention, in a food product, in particular as a thickener or stabilizer.

The invention is now further illustrated, in non-limiting manner, by the following examples:

### Methods:

### RVA (Rapid Visco Analyzer) Viscosity:

The viscosity values as indicated herein can be measured in a standardized RVA method: RVA (Rapid Visco Analyzer Super-4, NewPort Scientific, Inc., USA) was used for viscosity measurement.

Shear stability was measured based on AACC International method 76-21.01, ICC Standard No. 162, see e.g. Perten Instruments Method description, RVA Method 01.05, "General Pasting Method", 2001, according to the following pasting profile by mixing 2 g of starch (calculated weight portion based on dry starch) with 25 g of distilled water.

| **Time** | **Step** | **Value** |
|---|---|---|
| 00:00:00 | Starting Temperature | 45 °C |
| 00:00:00 | Rotation speed | 960 rpm |
| 00:00:10 | Rotation speed | 160 rpm |
| 00:01:00 | Temperature | 45 °C |
| 00:05:00 | Temperature | 95°C |
| 00:06:00 | Rotation speed | 2000 rpm |
| 00:07:00 | Temperature | 95°C |
| 00:09:00 | Rotation speed | 160 rpm |
| 00:10:00 | Temperature | 50 °C |
| 00:13:00 | end | |

Measurements include the following:
- Trough / minimum viscosity (TV) during the time period of maximum stirring and heating (2000 rpm and 95°C, see above) in cP (mPa_{*}s)
- End viscosity (EV) (13 min, 50°C, see above) in cP (mPa_{*}s)

"Dry starch" shall mean that the material was dried to constant weight at 120°C in an oven.

### Chemically cross-linked starch (E 1412)

The chemically cross-linked starch (E 1412) was Alimentamyl 2002, Südstärke GmbH, Schrobenhausen, DE.

### Water content of starch:

The water content of a starch (product) in wt.-% as indicated herein is determined, if not specifically indicated otherwise, by drying the material to constant weight at 120°C in an oven and comparing the weight of the sample before and after drying.

### pH measurement of starch:

Determination of pH was performed in a 20% starch suspension as follows. 20 g of starch (calculated weight portion based on dry starch) was suspended in demineralized water in order to obtain a 20% suspension. While stirring the suspension, the electrode of a commercial pH measurement device (e. g. WTW inoLab, Germany) suitable for the measurement of pH in liquids was dipped into the suspension. pH-values were determined after 5 min of stirring.

### Examples

In the following, the invention will be further illustrated by the following examples. These examples are only for illustrating the invention without restricting its scope, which is defined by the attached claims.

### Example

A native potato starch having a water content of 15 wt.-%, based on the total weight of the starch was mixed (moistened) with 30 ml of an aqueous NaOH solution having a pH value of 10.8. The resulting water content of the alkali-treated starch so obtained was of 32 wt.-%, based on the total weight of the starch composition. The pH of the alkali-treated starch was 6.5.

This starch composition was heated to 110°C for 6 hours in a conventional drum heating device. The water content was below 3 wt.-%.

Subsequently, the heated product was cooled down to ambient temperature and remoistened to a water content of 15 wt.-%.

The testing of the so obtained starch product was performed in a Rapid Visco Analyzer (RVA as described above. The viscosity results are summarized in Table 1 below.

For comparison, a commercial chemically cross-linked starch (E 1412) was tested, also at a water content of 15 wt.-%, in the RVA. The results are also shown in Table 1 below.

As a further comparison, Example 10 of US2001/0017133 A1 was repeated (spraying native starch with aqueous 25% sodium carbonate solution to a pH of 9.4 of the treated starch; heat treatment at 160 °C for 3 hours) and the samples (having also 15 wt.-% water content) were again tested in the RVA (see Table 1).

As a further comparison, Example 1 was repeated, but the pH of the alkaline solution used to treat the native starch was varied. Both a lower pH (8) and a higher pH (14) lead to inferior results, in particular regarding a lower end viscosity and lower ratio of EV to TV - the higher pH even caused a discoloration of the treated starch upon heating.

Moreover, using different amounts of the alkaline solution (pH 10.8) so that either the water content of 25 to 40 wt.-% was not reached (too low amount of alkaline solution added) or a slurry/dispersion was obtained (too high amount of alkaline solution added) lead to inferior EV values and EV/TV ratios.

| **Example** | **Trough (minimum) viscosity (TV) at max shear/temperature [mPa*s]** | **End viscosity (EV) [mPa*s]** | **Ratio EV to TV** |
|---|---|---|---|
| **Example 1 (invention)** | 217 | 1243 | 5.73 |
| **E 1412 (comparison)** | 484 | 1199 | 2.48 |
| **Example 10 of** US2001/0017133A1 **(comparison)** | 280 | 558 | 2.00 |

It is immediately evident that the starches according to the present invention, produced with the inventive method, have even a slightly higher end viscosity (EV) than the commercial E1412, and a significantly better ratio of EV to TV, allowing advantageous use and mixing into food and other compositions.

## Claims

1. A method for modification of starch, comprising the following steps:
a) adding an alkaline solution to a starch, in particular a native starch, to obtain an alkali-treated starch composition having a water content of 25 to 40 wt.-%, based on the total weight of the starch composition,
b) heating the alkali-treated starch composition, optionally after pre-drying,
wherein the pH of the alkaline solution is from 9 to 12, in particular 10 to 11, and
wherein the pH of the alkali-treated starch composition is from 5 to 7.

2. The method of claim 1, wherein the heating according to step b) is carried out at 100°C to 120°C, preferably for at least 1 hour.

3. The method according to claim 1 or 2, wherein the alkaline solution comprises a salt of an alkali or alkaline earth metal, preferably wherein the alkaline solution is an aqueous solution of an alkali or alkaline earth metal hydroxide.

4. The method according to to any of the preceding claims, wherein the alkaline solution is an aqueous solution of sodium carbonate, NaOH or KOH, preferably NaOH or KOH, more preferably NaOH.

5. The method according to any of the preceding claims, wherein the alkali-treated starch composition has a water content of 30 to 40 wt.-%, in particular 32 to 37 wt.-%, based on the total weight of the starch composition.

6. The method according to any of the preceding claims, wherein in step a) of claim 1 at least about 10 ml, preferably at least about 15 ml, more preferred at least about 20 ml, in particular at least 25 ml of the alkaline solution are added to the starch.

7. The method according to any of the preceding claims, wherein the heating and the optional pre-drying according to step b) of claim 1 is conducted until a water content of below 10 wt.%, in particular below 5 wt.-%, based on the total weight of the starch composition.

8. The method according to any of the preceding claims, wherein the pH of the alkali-treated starch composition is from 5.5 to 7.

9. The method according to any of the preceding claims, wherein the heating according to step b) of claim 1 is carried out for 1 to 24 hours, preferably 3 to 10 hours.

10. The method according to any of the preceding claims, wherein the starch used in step a) of claim 1 is a native starch, preferably having a water content of 1 to 20 wt.-%, in particular 5 to 20 wt.-%.

11. The method according to any of the preceding claims, wherein the starch used in step a) of claim 1 is a potato starch.

12. The method according to any of the preceding claims, wherein the addition of the alkaline solution to the starch according to step a) involves mixing and/or spraying of the alkaline solution on the starch.

13. Starch product obtainable by the process according to any of claims 1 to 12.

14. Use of a starch produced according to any of claims 1 to 12, or as defined in claim 13 in a food product, in particular as a thickener or stabilizer.

## Patentansprüche

1. Verfahren zur Modifizierung von Stärke, umfassend die folgenden Schritte:
a) Geben einer alkalischen Lösung zu einer Stärke, insbesondere einer nativen Stärke, wobei eine alkalibehandelte Stärkezusammensetzung mit einem Wassergehalt von 25 bis 40 Gew.-%, bezogen auf das Gesamtgewicht der Stärkezusammensetzung, erhalten wird,
b) Erwärmen der alkalibehandelten Stärkezusammensetzung, gegebenenfalls nach Vortrocknen,
wobei der pH-Wert der alkalischen Lösung 9 bis 12, insbesondere 10 bis 11 beträgt, und
wobei der pH-Wert der alkalibehandelten Stärkezusammensetzung 5 bis 7 beträgt.

2. Verfahren nach Anspruch 1, wobei das Erwärmen gemäß Schritt b) bei 100°C bis 120°C, bevorzugt mindestens 1 Stunde lang durchgeführt wird.

3. Verfahren gemäß Anspruch 1 oder 2, wobei die alkalische Lösung ein Salz eines Alkali- oder Erdalkalimetalls umfasst, bevorzugt wobei die alkalische Lösung eine wässrige Lösung eines Alkali- oder Erdalkalimetallhydroxids ist.

4. Verfahren gemäß einem der vorhergehenden Ansprüche, wobei die alkalische Lösung eine wässrige Lösung von Natriumcarbonat, NaOH oder KOH, bevorzugt NaOH oder KOH, stärker bevorzugt NaOH ist.

5. Verfahren gemäß einem der vorhergehenden Ansprüche, wobei die alkalibehandelte Stärkezusammensetzung einen Wassergehalt von 30 bis 40 Gew.-%, insbesondere 32 bis 37 Gew.-%, bezogen auf das Gesamtgewicht der Stärkezusammensetzung, aufweist.

6. Verfahren gemäß einem der vorhergehenden Ansprüche, wobei in Schritt a) von Anspruch 1 mindestens etwa 10 ml, bevorzugt mindestens etwa 15 ml, stärker bevorzugt mindestens etwa 20 ml, insbesondere mindestens 25 ml der alkalischen Lösung zu der Stärke gegeben werden.

7. Verfahren gemäß einem der vorhergehenden Ansprüche, wobei das Erwärmen und das optionale Vortrocknen gemäß Schritt b) von Anspruch 1 bis zu einem Wassergehalt von unter 10 Gew.-%, insbesondere unter 5 Gew.-%, bezogen auf das Gesamtgewicht der Stärkezusammensetzung, durchgeführt werden.

8. Verfahren gemäß einem der vorhergehenden Ansprüche, wobei der pH-Wert der alkalibehandelten Stärkezusammensetzung 5,5 bis 7 beträgt.

9. Verfahren gemäß einem der vorhergehenden Ansprüche, wobei das Erwärmen gemäß Schritt b) von Anspruch 1 1 bis 24 Stunden, bevorzugt 3 bis 10 Stunden lang durchgeführt wird.

10. Verfahren gemäß einem der vorhergehenden Ansprüche, wobei die in Schritt a) von Anspruch 1 verwendete Stärke eine native Stärke, bevorzugt mit einem Wassergehalt von 1 bis 20 Gew.-%, insbesondere 5 bis 20 Gew.-%, ist.

11. Verfahren gemäß einem der vorhergehenden Ansprüche, wobei die in Schritt a) von Anspruch 1 verwendete Stärke eine Kartoffelstärke ist.

12. Verfahren gemäß einem der vorhergehenden Ansprüche, wobei die Zugabe der alkalischen Lösung zu der Stärke gemäß Schritt a) Mischen und/oder Sprühen der alkalischen Lösung auf die Stärke einbezieht.

13. Stärkeprodukt erhältlich durch das Verfahren gemäß einem der Ansprüche 1 bis 12.

14. Verwendung einer Stärke hergestellt gemäß einem der Ansprüche 1 bis 12, oder wie in Anspruch 13 definiert in einem Nahrungsmittelprodukt, insbesondere als ein Verdickungsmittel oder Stabilisator.

## Revendications

1. Procédé de modification d'amidon, comprenant les étapes suivantes :
a) ajout d'une solution alcaline à un amidon, en particulier un amidon natif, pour obtenir une composition d'amidon traitée à l'alcali ayant une teneur en eau de 25 à 40% en poids, par rapport au poids total de la composition d'amidon ;
b) chauffage de la composition d'amidon traitée à l'alcali, éventuellement après un pré-séchage,
dans lequel le pH de la solution alcaline est compris entre 9 et 12, en particulier entre 10 et 11, et
dans lequel le pH de la composition d'amidon traitée à l'alcali est compris entre 5 et 7.

2. Procédé de la revendication 1, dans lequel le chauffage selon l'étape b) est effectué entre 100°C et 120°C, de préférence pendant au moins 1 heure.

3. Procédé selon la revendication 1 ou 2, dans lequel la solution alcaline comprend un sel d'un métal alcalin ou alcalino-terreux, de préférence dans lequel la solution aqueuse est une solution aqueuse d'un hydroxyde de métal alcalin ou alcalino-terreux.

4. Procédé selon l'une des revendications précédentes, dans lequel la solution alcaline est une solution aqueuse de carbonate de sodium, de NaOH ou de KOH, de préférence de NaOH ou de KOH, et plus préférablement de NaOH.

5. Procédé selon l'une des revendications précédentes, dans lequel la composition d'amidon traitée à l'alcali a une teneur en eau de 30 à 40% en poids, en particulier de 32 à 37% en poids, par rapport au poids total de la composition d'amidon.

6. Procédé selon l'une des revendications précédentes, dans lequel, à l'étape a) de la revendication 1, au moins environ 10 ml, de préférence au moins environ 15 ml, plus préférablement au moins environ 20 ml, et en particulier au moins 25 ml de la solution alcaline sont ajoutés à l'amidon.

7. Procédé selon l'une des revendications précédentes, dans lequel le chauffage et le pré-séchage éventuel selon l'étape b) de la revendication 1 sont réalisés jusqu'à ce que la teneur en eau soit inférieure à 10%, en particulier inférieure à 5%, par rapport au poids total de la composition d'amidon.

8. Procédé selon l'une des revendications précédentes, dans lequel le pH de la composition d'amidon traitée à l'alcali est compris entre 5,5 et 7.

9. Procédé selon l'une des revendications précédentes, dans lequel le chauffage selon l'étape b) de la revendication 1 est effectué pendant 1 à 24 heures, de préférence 3 à 10 heures.

10. Procédé selon l'une des revendications précédentes, dans lequel l'amidon utilisé à l'étape a) de la revendication 1 est un amidon natif, de préférence ayant une teneur en eau de 1 à 20%, en particulier de 5 à 20%.

11. Procédé selon l'une des revendications précédentes, dans lequel l'amidon utilisé à l'étape a) de la revendication 1 est un amidon de pomme de terre.

12. Procédé selon l'une des revendications précédentes, dans lequel l'ajout de la solution alcaline à l'amidon selon l'étape a) implique le mélange et/ou la pulvérisation de la solution alcaline sur l'amidon.

13. Produit d'amidon pouvant être obtenu par le procédé selon l'une des revendications 1 à 12.

14. Utilisation d'un amidon produit selon l'une des revendications 1 à 12, ou tel que défini dans la revendication 13, dans un produit alimentaire, en particulier comme épaississant ou stabilisant.
